# EUROPEAN PATENT SPECIFICATION

(11) **EP 3 969 173 B1**
(45) Date of publication and mention of the grant of the patent: **08.01.2025**
(21) Application number: 20724852.7
(22) Date of filing: 14.05.2020
(51) Int. Cl.: B01L 3/00, B01D 53/00, B65D 51/24, B65D 81/26, A61J 9/00, B01D 53/04, A61J 1/14

(54) **RECEPTACLE FOR HOLDING AN ACTIVE SUBSTANCE AND CORRESPONDING CAP AND CONTAINER**
BEHÄLTER ZUR AUFNAHME EINES WIRKSTOFFES UND ZUGEHÖRIGE KAPPE UND BEHÄLTER DAFÜR
RÉCIPIENT DESTINÉ À CONTENIR UNE SUBSTANCE ACTIVE ET BOUCHON ET RÉCIPIENT CORRESPONDANTS

(30) Priority: 14.05.2019 EP 19305615
(43) Date of publication of application: 23.03.2022
(73) Proprietor: Airnov, Inc., New Castle, DE 19808 (US)
(72) Inventor: LEBON, Jacquy, 85300 Challands (FR)
(74) Representative: Hoffmann Eitle
(86) International application number: PCT/EP2020/063468
(87) International publication number: WO 2020/229602

(56) References cited:
- JP-A- 2012 197 117
- JP-A- 2014 218 272
- JP-B2- 6 398 150
- US-A1- 2011 239 791
- US-A1- 2016 229 604

## Description

### Field of the invention

The invention relates to a receptacle intended to regulate the atmosphere in a container for storing sensitive products, the receptacle being designed to be at least partially filled with an active substance and permit gases and vapors to enter the receptacle for interacting with the active substance. The invention also relates to a cap for closing an open end of a container body and comprising such a receptacle, to a container body comprising such a receptacle, and to a container for storing loose products as well as its use.

### Background of the invention

A number of small desiccant canisters have been disclosed, which are formed from gas and liquid impermeable body portions which can be perforated and onto which are secured one or more perforated end caps. These canisters generally contain a desiccant material which adsorbs moisture from the air as the air flows through the perforations provided in an end cap of the desiccant canister.

Such canisters are used in containers which are filled with sensitive products like pharmaceuticals, the deterioration of which when exposed to moisture should be prevented.

A common structure of such canisters is a one piece plastic body containing a cylindrical outer wall and a circular bottom wall, onto which is secured a cap.

Mechanically assembled canisters are sometimes problematic in that the mechanical connection between the canister body and the cap might not be strong enough to withhold a deformation of the canister under load conditions. Such load conditions might occur during use in a container filled with particulate matter or under exceptional circumstances, e.g. when the container is inadvertently dropped onto a hard surface. Load conditions leading to a deformation of the canister might also occur during the distribution of the canister in an automatic conditioning device. The resulting undesired opening of the canister upon deformation has the consequence that its contents, e.g. dehydrating agents or oxygen adsorbents, might be introduced into the interior of the container and might contaminate goods contained therein, like drugs.

A different way to manufacture canisters is the assembly of a canister body with a porous membrane by means of the application of heat. When using a heat treatment, welding techniques have been previously suggested. For example, a canister with an elongated hollow plastic body can be provided with two caps, which are fused to the ends of the plastic body. Specifically, a manufacturing method was suggested including the steps of applying pressure and vibratory welding energy to the cap to form a fusion bond. However, the welding or any other comparable heat treatment to a porous membrane might be problematic because either the welded connection is weak or the membrane might be more sensitive to heat than the canister body. Accordingly, a heat treatment of a porous membrane might negatively influence its density, i.e. its permeability, and its behavior at the welded seams due to the degradation of the material of the membrane under an excessive thermal load.

As a further problem, the functional material inside the canister might also be negatively affected by elevated temperatures so that a heat treatment is not feasible under certain circumstances. For example, gas uptake kinetic of chemical adsorbent may be catalyzed by heat.

A mechanical assembly followed by a welding of the contact region between the canister body and the cap involves a further manufacturing step and increases the production costs.

A further technical problem of perforated membranes is that powder active materials can contain particles or pieces of particles which can be friable and/or small enough to pass through the perforations, leading to a contamination of the content of the container in which the canister is introduced.

In other solutions in the prior art, after filling in the active substance, the chamber is closed by a permeable disc, for example made of cardboard, which is fixed to the side walls of the chamber by crimping the extremity of the sidewalls of the chamber. One of the major drawbacks of such a solution in the prior art is the additional manufacturing step of attaching the disc and the associated quality control required because a safe attachment of the disc is essential in order to avoid a leakage of the active material and the undesired pollution of the articles contained in the container. In case of drugs, such pollution can be very problematic.

Another technology is to clip the permeable disc instead of crimping it. One of the main drawbacks of such solutions is the possibly insufficient holding force of the permeable disc, resulting in leakage of the absorbent material and pollution of the drugs contained in the container.

JP 6 398150 B2 and JP 2012 197117 A describe receptacles for containing a desiccant which represent the prior art.

### Disclosure of the invention

It is an object of the invention to provide a receptacle for an active substance which is easy to manufacture, and safely avoids potential leakage of the active substance and allows a sufficient transport of the gaseous substances to be trapped from the outside to the inside of the receptacle.

The scope of the invention is a receptacle intended to regulate the atmosphere in a container and its use, as described in the claims.

For this purpose, a subject of the invention is a receptacle intended to regulate the atmosphere in a container for storing sensitive products, wherein the receptacle is designed for forming a chamber which is at least partially filled with an active substance for atmosphere regulation, the receptacle comprising two main elements, i.e.: a first element comprising a transverse wall with a first main side facing the interior of the chamber, and a peripheral wall integrally formed with the first main side of the transverse wall, and a second element comprising a bottom wall and a sheath extending from the bottom wall and being integrally formed with the bottom wall, wherein the peripheral wall of the first element and the sheath of the second element are dimensioned and mutually arranged to surround one another in contact with each other in abutting regions so that the inner volume of the chamber capable of receiving the active substance is delimited by the bottom wall of the second element, the transverse wall of the first element and the peripheral wall of the first element and/or the sheath of the second element, wherein at least one ventilation groove, formed as a recess in at least one of the first and second elements, is provided between the peripheral wall of the first element and the sheath of the second element, preferably running in a direction perpendicular to the bottom wall, and at least one radial passage, formed as a recess in at least one of the first and second elements, is provided to connect the ventilation groove with the inner volume of the chamber, such that the ventilation groove and the radial passage form at least part of a ventilation path connecting the chamber with the atmosphere in the container outside the chamber.

The term "ventilation groove" describes any voids between the sheath and the peripheral wall which enable air communication within the ventilation path. In a similar way, the term "radial passage" describes any voids which enable air communication between a ventilation groove and the inner volume of the chamber so that gases can circulate radially between the ventilation groove and the chamber.

According to the invention, the inner volume of the chamber is delimited by the bottom wall of the second element, the transverse wall of the first element and the peripheral wall of the first element and/or the sheath of the second element. In other words, all of these walls, including the bottom wall and the transverse wall, can be in contact with the active substance received in the chamber. Such arrangement makes it possible to maximize the volume of the chamber for receiving the active substance, in particular when compared to preassembled canisters closed with a porous membrane. In practice, in order to produce the receptacle of the invention containing an active substance in its chamber, one element among the first element and the second element is at least partially filled with the active substance; then, the other element among the first element and the second element is engaged relative to the element previously filled with the active substance so that the peripheral wall of the first element and the sheath of the second element surround one another, in contact with each other in abutting regions, the inner volume of the chamber being delimited by the bottom wall of the second element, the transverse wall of the first element and the peripheral wall of the first element and/or the sheath of the second element.

According to one embodiment, an open end of the sheath remote from the bottom wall is in abutment against the transverse wall of the first element. Such abutment makes it possible to retain the active substance within the chamber in the absence of a porous membrane closing the open end of the sheath. The second element having a sheath devoid of a porous membrane to close its open end remote from the bottom wall has the advantage of having a simpler and more economical manufacturing process. Advantageously, the presence of at least one radial passage allows gases to circulate between the ventilation groove and the chamber in such a configuration where the open end of the sheath is in abutment against the transverse wall of the first element.

At least one section of the ventilation path connecting the chamber with the atmosphere in the container, and in particular the ventilation groove(s) and/or radial passage(s), have very small dimensions so that dust escaping from the chamber gets stuck and cannot escape to the outside atmosphere. According to one embodiment, at least one section of the ventilation path connecting the chamber with the atmosphere in the container has a cross-sectional dimension of 0.2 mm or less, preferably 0.1 mm or less, more preferably 0.05 mm or less. Within the meaning of the invention, a cross-sectional dimension of the ventilation path is a dimension taken transversely to the direction of circulation of gases or particles in the ventilation path between the chamber and the atmosphere in the container. It is noted that, in the receptacle according to the invention, the active substance is received in a chamber delimited directly by walls of the first and second elements, without any porous membrane for retaining the active substance in the inner volume of the chamber. For this reason, the ventilation path is specifically configured to allow passage of gases between the chamber and the atmosphere in the container, while preventing escape of the active substance from the chamber toward the atmosphere in the container.

In view of the dust being a particulate matter, one dimension of the ventilation groove should be selected small enough so that the dust cannot pass through the ventilation grooves. The provision of the ventilation grooves between the first element and the second element are advantageous because their size can be controlled with a high accuracy because of the abutting relationship between the first element and the second element of the receptacle. Within the frame of the invention, three dimensions of a ventilation groove may be defined, i.e.: the length of the ventilation groove, taken in the longitudinal direction of the ventilation groove; the depth of the ventilation groove, taken from a bottom of the ventilation groove to the adjacent abutting region; the width of the ventilation groove, taken in a direction transverse to the longitudinal direction and the depth direction of the ventilation groove. According to one embodiment of the invention, the at least one ventilation groove has a depth of 0.2 mm or less, preferably 0.1 mm or less, more preferably 0.05 mm or less. Small dimensions of 0.1 mm or even 0.05 mm either in the depth direction or in the width direction of the ventilation groove are advantageous so that the receptacle can also be used for storing powders with a small particle size.

Preferably, the at least one ventilation groove has a length of at least 2 mm. When combined with the small depth or width described above, this even increases the difficulty for a dust particle to escape. According to one embodiment, the ratio between the length and the width or the length and the depth is greater than 10:1, preferably greater than 20:1, more preferably greater than 40:1.

Surprisingly, inventors have found that the receptacle with the at least one ventilation groove, in particular with the specific ratio of dimensions as given above, can also be used for storing liquids in a leak-tight manner. For example, instead of containing a desiccant under granulated or powder form, the receptacle can contain a liquid, for example a saturated salt solution. Some saturated salt solutions are known to maintain the relative humidity at a specific value. The receptacle filled with such liquids can be used to keep pharmaceutical healthcare and other products at a constant and regulated moisture level when they are stored in a package or container comprising such a receptacle.

Such small structures like small grooves or ribs forming grooves between two consecutive ribs can be formed with injection molding machines using molds which are precision machined by micromachining or nanomachining.

The chamber of the receptacle is formed by two separate elements which can be fit one into the other. In order to ensure that there is a sufficient exchange of air, at least one ventilation groove is provided which transports air between the chamber filled with an active substance and the atmosphere in the container outside the chamber.

As soon as the receptacle is arranged inside a closed container, the atmosphere outside the chamber has to be understood to be the atmosphere within the closed container.

The solution according to the invention has the advantage that the active substance within the chamber is firmly contained therein and will not inadvertently leak out.

Further, the solution according to the invention can form the receptacle exclusively from pharmaceutically suitable plastic material. Finally, the solution according to the invention speeds up the assembly of the receptacle because the process of connecting the first and second element consumes less time as compared to the closing of the chamber by means of a crimping or a welding process.

A further advantage of the receptacle according to the invention is that it is possible only to fill the chamber partially without the risk of loosening the cardboard disc as used in the prior art. Further, the assembly is faster than the technology of hot crimping a permeable disc.

A further advantage of the solution is that both the first element and the second element can be made of the same material. Alternatively, the second element can be made of a plastic material which is more permeable than the plastic material of the first element. The material of the second element can be selected depending on its permeability for the gas that needs to be trapped by the active substance. Advantageously, the second element can be made of a material comprising the active substance blended with a plastic material, for example a desiccant entrained polymer.

The at least one ventilation groove can be dimensioned such that it forms at least a part of an unobstructed path which is formed between the chamber and the atmosphere outside the chamber. In case of e.g. desiccant particles as active substance, the dimension of the at least one ventilation groove can be selected such that the desired exchange of the air will not be impeded by a single particle within the chamber which might obstruct the free cross-section of the ventilation groove. In the same way, the cross-sectional dimension and shape of the ventilation groove should be selected such that a particle of the active substance cannot enter and get stuck therein. If the particles of the active substance create some dust particles which are small enough to get stuck in the ventilation groove, they cannot obstruct completely the ventilation groove.

A ventilation groove describes any recessed geometry bounded by elevated structures. It can be a conventional groove extending into the sheath of the second element. It can also be formed between ribs extending out of the sheath. Further, the ventilation grooves might also cross each other. According to one embodiment, a plurality of ventilation grooves are provided between the peripheral wall of the first element and the sheath of the second element.

The receptacle according to the invention covers two different solutions. Either the peripheral wall is arranged outwards of the sheath, or the sheath is arranged outwards of the peripheral wall in an overlapping region.

The at least one ventilation groove has to be provided in an overlapping region between the peripheral wall and the sheath. If the sheath does not fully extend to the transverse wall, the chamber might also be delimited by both a part of the peripheral wall of the first element and the sheath of the second element.

The receptacle according to the invention can be used for any active substance.

Active substances are capable of absorbing various different pollutants such as humidity, oxygen, odour and other possible pollutants, and thus capable of regulating the atmosphere in a container. They belong to a group of humidity absorbers, oxygen scavengers, odour absorbers and/or emitters of humidity or volatile olfactory organic compounds.

Suitable dehydrating agents are selected from a group comprising silica gels, dehydrating clays, activated alumina, calcium oxide, barium oxide, natural or synthetic zeolites, molecular or similar sieves, or deliquescent salts such as magnesium sulfide, calcium chloride, aluminum chloride, lithium chloride, calcium bromide, zinc chloride or the like. Preferably, the dehydrating agent is a molecular sieve and/or a silica gel.

A suitable oxygen collecting agent is selected from a group comprising metal powders having a reducing capacity, in particular iron, zinc, tin powders, metal oxides still having the ability to oxidize, in particular ferrous oxide, as well as compounds of iron such as carbides, carbonyls, hydroxides, used alone or in the presence of an activator such as hydroxides, carbonates, sulfites, thiosulfates, phosphates, organic acid salts, or hydrogen salts of alkaline metals or alkaline earth metals, activated carbon, activated alumina or activated clays. Other agents for collecting oxygen can also be chosen from specific reactive polymers such as those described for example in the patents US 5,736,616, WO 99/48963, WO 98/051758 and WO 2018/149778.

In one embodiment, the receptacle according to the invention is made of a suitable plastic material which is preferably selected from the group comprising radical or linear high and low density polyethylenes, copolymers of ethylene such as for example ethylene vinyl acetates, ethylene ethyl acrylates, ethylene butyl acrylates, ethylene maleic anhydrides, ethylene alpha olefines, regard-less of the methods of polymerisation or modification by grafting, homo polypropylene and copolymers, polybutene-1, polyisobutylene. Polyolefines are preferably selected to make the single-use container for cost reasons and because they are easy to use.

Other polymer materials can be considered however such as polyvinyl chloride, copolymers of vinyl chloride, polyvinylidene chlorides, polystyrenes, copolymers of styrene, derivatives of cellulose, polyamides, polycarbonates, polyoxymethylenes, polyethylene terephthalates, polybutylene terephthalates, copolyesters, polyphenylene oxides, polymethyl methacrylates, copolymers of acrylate, fluoride polymers, polyphenylene sulphides, polyarylsulphones, polyaryletherketones, polyetherimides, polyimides, polyurethanes, phenol resins, melamine resins, urea resins, epoxy resins and unsaturated polyester resins.

Biodegradable polymer materials, with for example a starch base, are also possible such as polylactic acids (PLA).

Combinations of these polymers can be used, if desired. The polymer used to produce the receptacle can also contain one or more additives such as fibers, expanding agents, additives such as stabilizers and colorants, sliding agents, demolding agents, adhesion agents or reinforced catching agents and/or any others according to the requirements of usage.

According to one example, the sheath and the peripheral wall have a substantially tubular shape. The tubular shape covers any cross-section with a closed wall of the sheath and of the peripheral wall. Tubular shapes can be e.g. oval or square-shaped. However, it is especially advantageous to provide a circular cross-section for the sheath and the peripheral wall. Such a shape has the advantage that the attachment of the second element to the first element is simplified, because no specific rotational orientation of the second element relative to the first element is required.

According to one embodiment, the sheath has a plurality of ventilation grooves. Such geometry has several advantages. On the one hand, the provision of a plurality of ventilation grooves addresses the problem that despite of small dimensions, the ventilation groove could become obstructed e.g. by a fragment of a particle. On the other hand, in case of using an active substance which absorbs undesired components, the provision of a plurality of ventilation grooves makes it possible to bring different parts of the chamber in contact with such undesired components, so that the active substance becomes loaded more uniformly. Finally, the provision of a plurality of ventilation grooves increases the exchange of air so that the active substance within the chamber can be regulate the atmosphere in the container more quickly.

According to one embodiment, the sheath has at least one ventilation groove extending to the open end of the sheath remote from the bottom wall, preferably starting in the vicinity of the bottom wall. In this way, the whole length of the sheath is used for gas circulation, which lengthens an exit route for the active substance received in the chamber and limits the risk of leakage of the active substance from the chamber towards the interior of the container.

According to one embodiment of the invention, the open end of the sheath remote from the bottom wall is a crenelated rim comprising at least one radial crenel. According to one embodiment, the at least one ventilation groove is arranged such that the ventilation groove ends at a radial crenel of the crenelated rim or at a section of the ventilation path which connects an end of the ventilation groove with at least one radial crenel.

According to one embodiment, the grooves and radial crenels can be mutually offset to create a tortuous ventilation path. Such configuration where the ventilation grooves do not end at crenels of the crenelated rim corresponds to the case where the ventilation path also comprises a section connecting the end of the ventilation grooves with one or more radial crenels which leads to a tortuous ventilation path. A tortuous ventilation path improves efficiency to prevent that dust particles can escape from the chamber to the outside atmosphere. Furthermore, the tortuous ventilation path can include dust accumulation zones, for example in which the depth or width of the ventilation path is increased compared to the depth or width of the ventilation groove. In one embodiment, the dust accumulation zone is adjacent to a change in direction of the ventilation path. Such geometry further prevents dust particles within the chamber escaping through the ventilation path.

Radial crenels at the open end of the sheath remote from the bottom wall have the advantage that they form radial passages making a circulation of ventilation air also possible in case that the sheath of the second element extends up to the transverse wall of the first element, i.e. abuts against the transverse wall of the first element. In such a case, it is also be possible to provide grooves in the first main side of the transverse wall. However, from a manufacturing point of view, the forming of radial crenels in the sheath of the second element is preferred because it allows the use of the same first element, especially when integrated in a cap or a container body, as it was used in the prior art when a cardboard was attached to it for closing the chamber. Thus, an already existing mold can be used again.

According to one embodiment, the first element of the receptacle is a constitutive part of the container. In one particular embodiment, the first element of the receptacle is a part of an openable or removable cap of the container, the cap being provided with a base with a first main side facing the interior of the container when closing the container, the transverse wall of the first element being integrally formed with the base of the cap whereas the peripheral wall is a skirt integrally formed with the base of the cap. In another embodiment, the first element of the receptacle is a bottom part of a container body, the transverse wall being a bottom wall of the container body whereas the peripheral wall is a side wall of the container body.

According to one embodiment, the sheath surrounds the peripheral wall, and the at least one ventilation groove is arranged on the inner peripheral surface of the sheath.

According to one embodiment, the receptacle further comprises at least one bottom ventilation groove in the bottom wall of the sheath facing the chamber and being in communication with the at least one ventilation groove arranged on the inner peripheral surface of the sheath.

According to an alternative embodiment, the peripheral wall surrounds the sheath, and the at least one groove is arranged at the outer peripheral surface of the sheath.

According to one example, the sheath comprises an outer radial collar configured to cover an end of the at least one ventilation groove in the vicinity of the bottom wall while leaving a radial clearance with the peripheral wall of the first element. Advantageously, such a radial collar covering the end of the ventilation groove makes it possible to avoid that sensitive products received in the container pass toward the ventilation groove. In addition, the clearance between the radial collar and the peripheral wall of the first element allows a circulation of gas between the ventilation groove and the container, the fitting between the first and second elements being realized in the abutting regions provided between the peripheral wall and the sheath.

The sheath can be fixed by a friction fit in the abutting regions between the peripheral wall and the sheath with substantially equal dimensions of the peripheral wall and the sheath such that they snugly fit into each other. This constitutes the easiest way to mount the receptacle according to the invention. The sheath can also be fixed by a press-fit in the abutting regions between the peripheral wall and the sheath, in particular with dimensional interferences between the peripheral wall and the sheath such that a contact pressure is resulting when one is placed into each other. Preferably, the sheath is fixed by a press-fit which provides a firm connection of the sheath and the peripheral wall.

As an alternative or in addition to a press-fit, the first element and the second element of the receptacle can be connected by means of a snap-fit connection.

According to one example, the receptacle is made of plastic material which is preferably pharmaceutically approved.

Another subject of the invention is a cap for closing an open end of a container body, as described in the set of claims.

According to an example, the cap of the container further comprises an outer rim integrally formed with the first main side of the base, the outer rim being arranged concentrically and radially outwards relative to the sealing element, wherein in the closed state the outer rim contacts the outer circumference of the side wall of the container body, and the sealing member contacts and seals against the inner circumference of the side wall of the container body.

The body of the container can be of any shape including a cylindrical shape with a round, oval or polygonal base. However, apart from cylindrical shapes, the container body can be of any geometry including irregular shapes.

The container can be used for storing sensitive products such as moisture sensitive products or oxygen sensitive products, especially pharmaceutical products, in particular drugs, pills, tablets, globuli, granulate, lozenges, test strips or powder.

The receptacle according to the invention is also advantageously used in a container for storing sensitive products such as moisture sensitive products or oxygen sensitive products, especially pharmaceutical products, in particular drugs, pills, tablets, globuli, granulate, lozenges, test strips or powder.

### Brief description of the drawings

In the following, the invention will be described by way of example with reference to the accompanying drawings in which:
- Fig. 1: shows a first embodiment of a receptacle according to the invention incorporated in a cap;
- Fig. 2: shows a cross-sectional side view of the receptacle according to the embodiment of Fig. 1;
- Fig. 3A: shows the second element of the embodiment according to Fig. 1;
- Fig. 3B: shows a variant of the second element as shown in Fig. 3A;
- Fig. 4: is a cross-sectional side view of the second element according to Fig. 3A;
- Fig. 5: is a top view of the second element according to Fig. 3A which additionally shows the position of the cross-sectional view of Fig. 4 indicated by arrows;
- Fig. 6: shows a second embodiment of a receptacle according to the invention incorporated in a cap;
- Fig. 7: shows a cross-sectional side view of the receptacle according to the embodiment of Fig. 6;
- Fig. 8A: shows the second element of the embodiment according to Fig. 6;
- Fig. 8B: shows a variant of the second element as shown in Fig. 8A;
- Fig. 9: is a cross-sectional side view of the second element according to Fig. 8A;
- Fig. 10: is a top view of the second element according to Fig. 8A which additionally shows the position of the cross-sectional view of Fig. 9 indicated by arrows;
- Fig. 11: shows a third embodiment of a receptacle;
- Fig. 12: shows an exploded view of a fourth embodiment of a receptacle according to the invention incorporated in a container body;
- Fig. 13: is a cross-sectional view along lines XIII-XIII in Fig. 12;
- Fig. 14: is a view at larger scale of the detail XIV in Fig. 12;
- Fig. 15: is a view at larger scale of the detail XV in Fig. 12; and
- Fig. 16: is a perspective view of the second element of the fourth embodiment shown in Figs. 12 and 13.

### Description of embodiments

In the following, several embodiments of the invention will be described. Wherever appropriate, the same elements will be denoted by the same reference numerals.

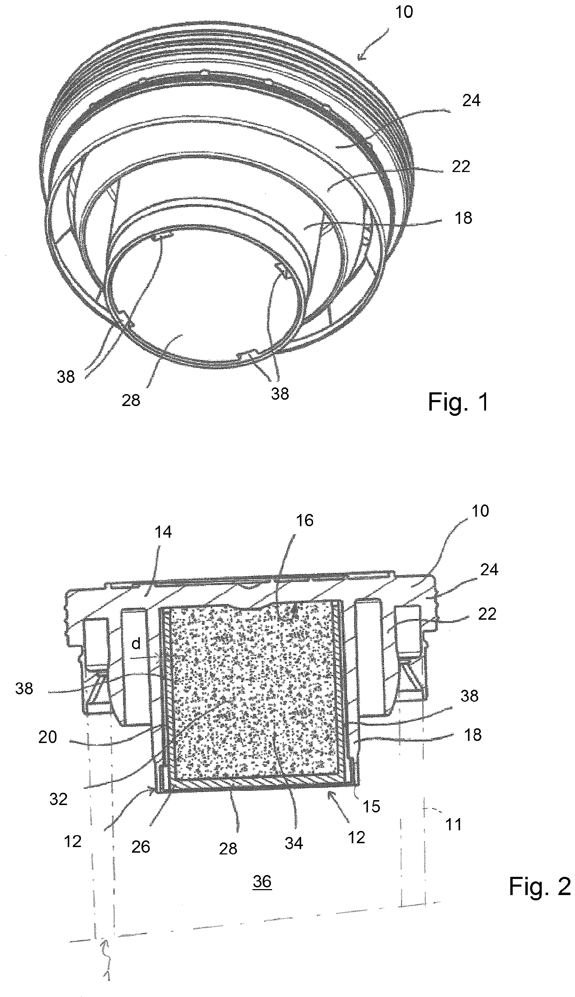

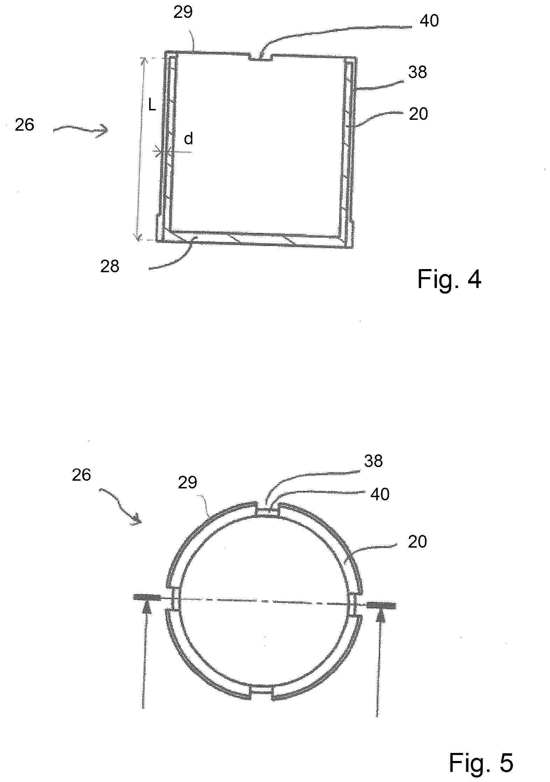

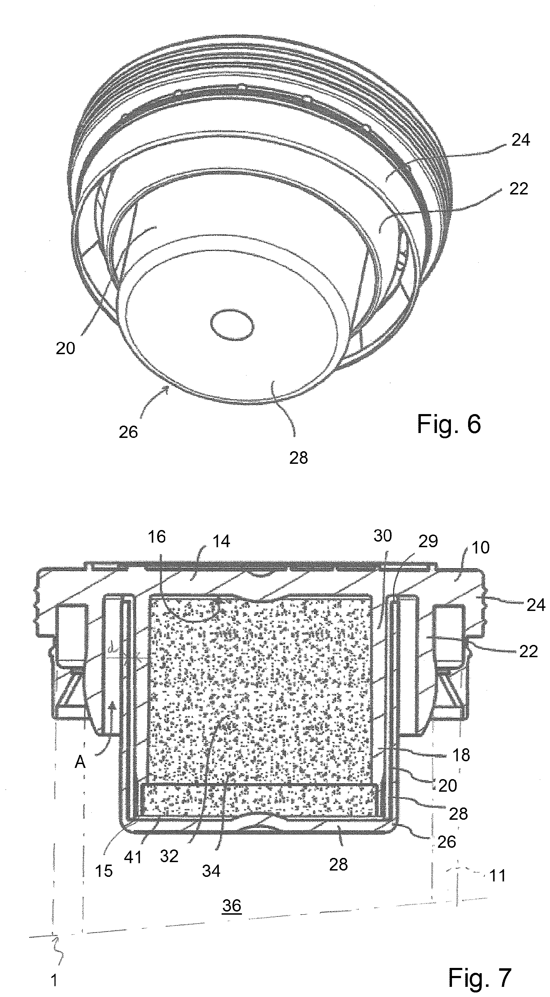

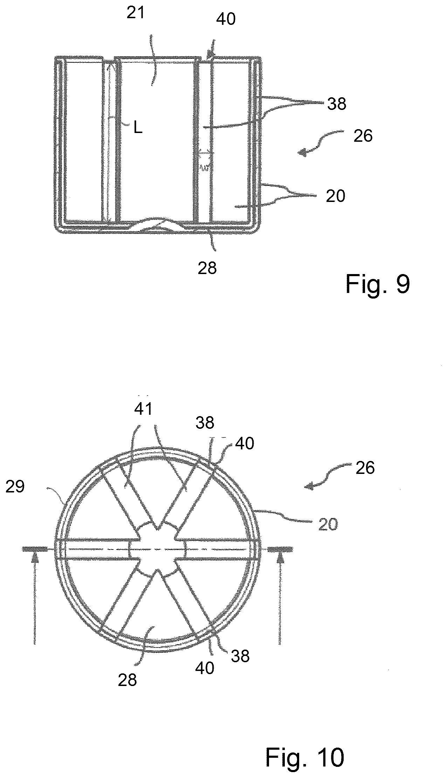

As will be shown below with reference to the specific embodiments and its variants, the major difference between the first embodiment according to Fig. 1 to Fig. 5 and the second embodiment according to Fig. 6 to Fig. 11 lies in the mutual radial arrangements of the concentrically arranged skirt of the first element and the sheath of the second element.

In Figs. 1 and 2, a cap 10 is shown which comprises the receptacle 12 according to the invention. The cap 10 has a transverse wall 14 with a first main side 16 facing the interior of a container 1 which the cap 10 is supposed to close.

The transverse wall 14 is integrally provided with the circular skirt 18. Further, an annular sealing element 22 is integrally formed with the transverse wall 14 and also extends away from the first main side 16. When the cap 10 is closed onto the container body 11, the skirt 18 and the sealing element 22 extend towards the inside of the container 1. Radially outside the sealing element 22 and concentrically arranged relative to the sealing element 22 is an outer rim 24. The rim 24 can for example cooperate with the sealing element 22 to establish a moisture tight seal with the wall of the container body 11 surrounding its upper opening. The rim 24 can also be connected to a tamper evident ring for providing a visual indication of first opening to the end user. The rim 24 can also comprise a surface, a cavity or any geometry facilitating the opening of the container 1 by the end user.

The transverse wall 14 of the cap 10 together with the skirt 18 constitutes the first element 30 of two elements forming the receptacle 12. The second element 26 comprises a bottom wall 28 and a sheath 20. The sheath 20 is integrally formed with the bottom wall 28, has a substantially tubular shape and extends perpendicularly from the bottom wall 28. In the example as shown in Fig. 2, the outer diameter of the sheath 20 is selected such that the second element 26 can be placed inside the skirt 18.

The second element 26 is dimensioned so that it is frictionally held, preferably tightly held by means of a press-fit at the abutting regions 21 between the sheath 20 and the skirt 18, within the skirt 18 of the first element 30 which comprises at least a part of the transverse wall 14 and the skirt 18 integrally formed therewith.

Bound by the first main side 16 of the transverse wall 14, the sheath 20 and the bottom wall 28, a chamber 32 is formed which contains an active substance 34.

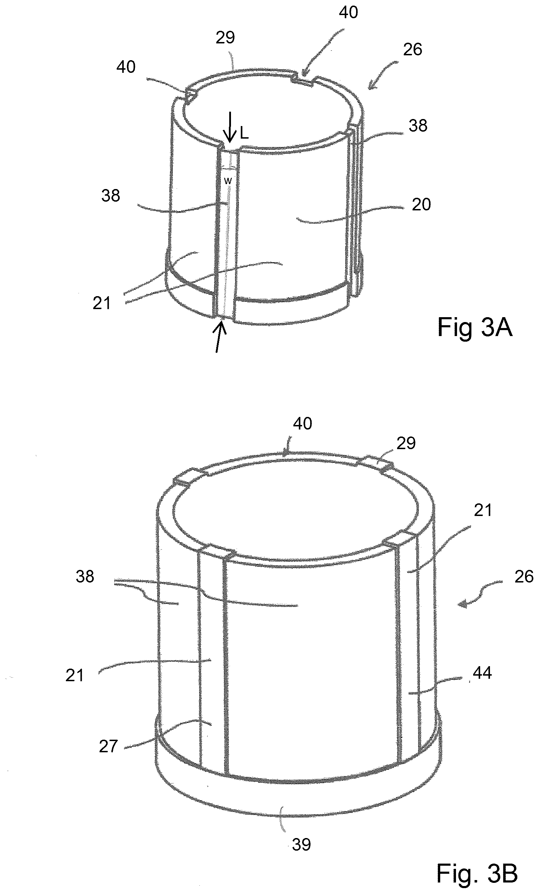

In order to allow the exchange of air between the chamber 32 and the atmosphere 36 in the container 1, a ventilation path with ventilation grooves 38 is provided. The ventilation grooves 38 are formed, as can be best seen in Fig. 3A, in the outer circumferential surface of the sheath 20, so that in the assembled state of the first element 30 and the second element 26, the ventilation grooves 38 are formed between the inner circumferential surface of the skirt 18 and the outer circumferential surface of the sheath 20. In the variant according to Fig. 3B, ribs 27 are formed on the outer surface of the sheath 20 of the second element 26. The ribs 27 provide the abutting regions 21 and the grooves 38 are formed between two adjacent ribs 27, respectively. In the variant of Fig. 3B, the sheath 20 comprises an outer radial collar 39 which is configured to cover an end of the ventilation grooves 38 in the vicinity of the bottom wall 28 and to leave a radial clearance with the skirt 18 when the sheath is engaged relative to the skirt.

The second element 26 is arranged so that the open end 29 of the sheath 20 abuts against the first main side 16, and further provisions have to be made so that the outside atmosphere 36 can enter the chamber 32 in an unobstructed way.

To this end, the sheath 20 is provided with radial crenels 40 which are arranged so that each ventilation path ends at one or more radial crenels 40. At the position of each radial crenel 40, the sheath 20 does not abut against the first main side 16 of the transverse wall 14 so that the outside atmosphere 36 can communicate via the ventilation path comprising the ventilation grooves 38 and associated radial crenels 40 with the air inside the chamber 32.

Turning now to the second embodiment as shown in Figs. 6 to 10, the overall structure is quite similar to that as described in the embodiment according to Figs. 1 to 5. Therefore, the description of many elements also denoted in one of Figs. 6 to 10 can be omitted with reference to the previous explanations.

As can be seen in Figs. 6 and 7, the second element 26 of the receptacle 12 is arranged relative to the first element 30 such that the radial arrangement of the skirt 18 and the sheath 20 is reversed. As can be best seen in Fig. 7, the sheath 20 is arranged radially outwards and concentrically to the skirt 18. The sheath 20 is dimensioned such that it tightly fits over the outer circumferential surface of the skirt 18 so that it is frictionally held at the abutting regions 21, once the receptacle 12 has been mounted by combining the first and second elements.

The chamber 32 is formed between the first main side 16 of the transverse wall 14, the skirt 18 and the bottom wall 28 of the second element. If required, bottom grooves 41 or bottom ribs forming depressions between the ribs can be provided in the bottom wall 28 facing the interior of the chamber. Further, the lower rim 15 of the skirt 18 can also be provided with radial crenels so that an air communication between the ventilation grooves 38 and the chamber 32 is established in case that the skirt 18 fully extends into contact with the bottom wall 28.

In order to provide air communication between the atmosphere 36 in the container 1 and the chamber 32, a ventilation path comprising ventilation grooves 38 is provided. In this embodiment, the ventilation grooves 38 are arranged at the inner circumferential surface of the sheath 20 of the second element 26. Accordingly, channels are formed between the abutting surfaces 21 of the sheath 20 and the skirt 18.

Like in the previous embodiment, radial crenels 40 are formed at the open end 29 of the sheath 20 which is not connected to the bottom wall 28. The radial crenels 40 are arranged in communication via the ventilation path comprising the ventilation grooves 38 so that the air communication between the outside atmosphere 36 and the chamber 32 is possible over the path marked with the arrow A in Fig. 7, the radial crenels 40 of the sheath 20, the ventilation grooves 38 and the crenels in the skirt 18 or the bottom grooves 41.

Although the above embodiments relate to a receptacle 12, the first element 30 of which is integrally formed with the transverse wall 14 of the cap 10, a receptacle can also be formed by two separate elements which can be fixed in a suitable way to the cap or another part of the container.

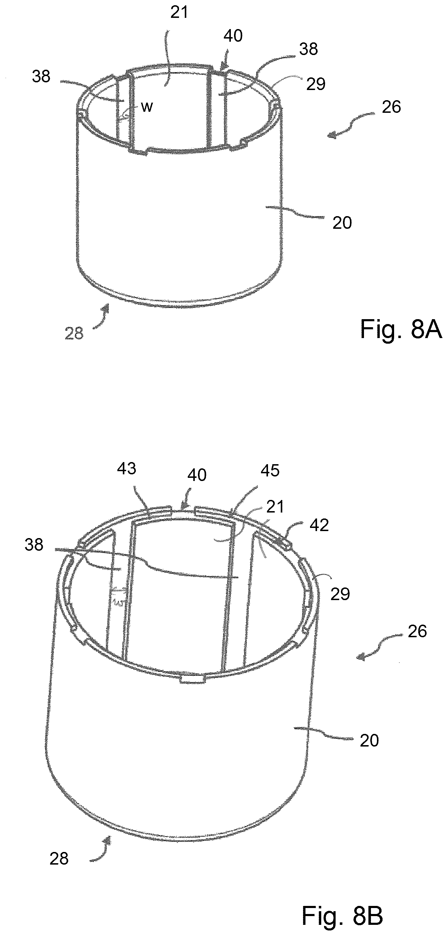

In the embodiment as shown in Figs. 8A, 9 and 10, the ventilation grooves 38 are arranged at the positions of the radial crenels 40.

According to the variant according to Fig. 8B, a more complex ventilation path 45 is provided comprising the ventilation grooves 38, intermediate sections 43 and radial crenels 40. A tortuous ventilation path has the advantage that dust particles are more efficiently prevented from escaping through a tortuous path with a plurality of sharp bends. Further, a tortuous ventilation path can even form areas in which potential dust particles will accumulate but cannot escape to the outside atmosphere. The ventilation grooves 38 and the radial crenels 40 are arranged radially offset. The ventilation path 45 comprises additional intermediate sections 43 which are the circumferentially extending connecting sections 43 connecting the ends of the ventilation grooves 38 with the radial crenels 40. Such geometry leads to a tortuous ventilation path 45 which further prevents dust particles within the chamber escaping through the ventilation path.

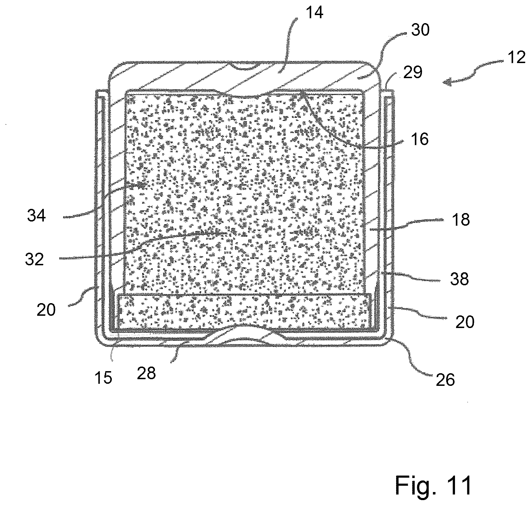

Fig. 11 shows a third embodiment of a receptacle which is very similar to that according to Fig. 7. The major difference to the embodiment of Fig. 7 lies in the fact that the first element 30 of the receptacle 12 according to Fig. 11 is not integrally formed with a cap. Instead, the first element 30 and the second element 26 form a receptacle which is a separate canister and which can be attached to the base of a cap, preferably by means of a snap-fit connection.

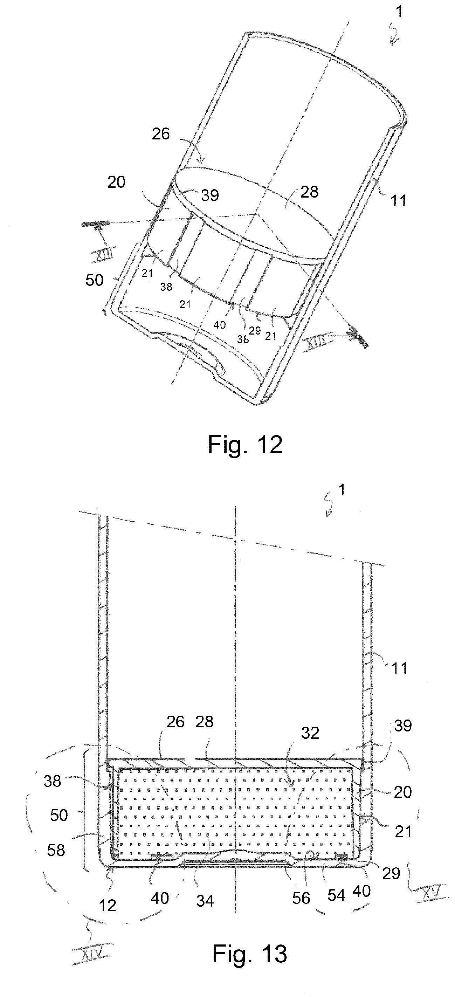

In the fourth embodiment shown in Figs. 12 to 16, elements that are similar to those of the previous embodiments have the same references. In the fourth embodiment, the receptacle 12 according to the invention is integrated in a bottom part 50 of the body 11 of a container 1 for storing sensitive products. The bottom part 50 of the container body 11 has a transverse base wall 54 with a first main side 56 facing the interior of the container 1.

The transverse wall 54 is integrally provided with the circular side wall 58 of the container body 11. The transverse wall 54 together with the side wall 58 constitute the first element 50 of the two elements forming the receptacle 12. The second element 26, in a way similar to the previous embodiments, comprises a bottom wall 28 and a sheath 20. The sheath 20 is integrally formed with the bottom wall 28, has a substantially tubular shape and extends perpendicularly from the bottom wall 28. As visible e.g. in the exploded view of Fig. 12 and the assembled view of Fig. 13, the outer diameter of the sheath 20 is selected such that the second element 26 can be placed inside the side wall 58 of the container body 11 in the bottom part 50 thereof.

The second element 26 is dimensioned so that, in the assembled configuration of the receptacle 12, it is frictionally held, preferably tightly held by means of a press-fit at the abutting regions 21 between the sheath 20 and the side wall 58, within the side wall 58 of the first element 50. In this fourth embodiment, the chamber 32 which contains an active substance 34 is delimited by the first main side 56 of the transverse wall 54, the sheath 20 and the bottom wall 28.

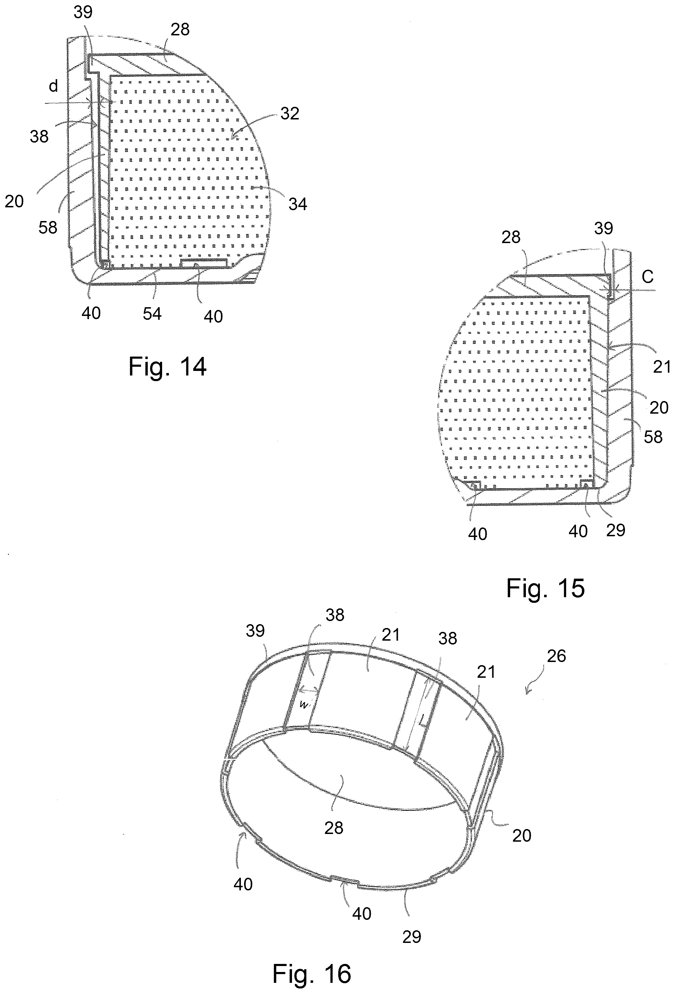

In order to allow the exchange of air between the chamber 32 and the atmosphere in the container 1, a ventilation path with ventilation grooves 38 is provided. The ventilation grooves 38 are formed, as can be best seen in Fig. 16, in the outer circumferential surface of the sheath 20, so that in the assembled state of the first element 50 and the second element 26, the ventilation grooves 38 are formed between the inner circumferential surface of the side wall 58 and the outer circumferential surface of the sheath 20.

The sheath 20 comprises an outer radial collar 39 which is configured to cover an end of the ventilation grooves 38 in the vicinity of the bottom wall 28 and to come in abutment against an inner shoulder of the container body 11, while leaving a radial clearance C with the side wall 58. The collar 39 covering the end of the ventilation grooves 38 makes it possible to avoid that sensitive products received in the container body 11 pass inside the ventilation grooves 38. In addition, the clearance C between the collar 39 and the side wall 58 allows a circulation of gas between the ventilation groove 38 and the container, the fitting between the first element 50 and the second element 26 being realized in the abutting regions 21.

When the collar 39 rests against the inner shoulder of the container body 11, the second element 26 is arranged so that the open end 29 of the sheath 20 remote from the bottom wall 28 abuts against the first main side 56. The end 29 of the sheath 20 is provided with radial crenels 40 which are arranged so that each ventilation groove 38 ends at a radial crenel 40, so that gases from the atmosphere of the container 1 can enter the chamber 32 in an unobstructed way. At the position of each radial crenel 40, the outside atmosphere in the container 1 can communicate via the ventilation path comprising the ventilation grooves 38 and associated radial crenels 40 with the air inside the chamber 32.

Advantageously, in the embodiments described above, each ventilation groove 38 has a depth d of 0.2 mm or less, preferably 0.1 mm or less, more preferably 0.05 mm or less. Preferably, the ratio of the length L to the depth d of each ventilation groove 38 is greater than 10, preferably greater than 20, more preferably greater than 40. In addition, the ratio of the length L to the width w of each ventilation groove 38 is greater than 10, preferably greater than 20, more preferably greater than 40. Such dimensions increase the difficulty for the active substance 34 to escape out of the chamber 32, while allowing gas exchange between the chamber 32 and the atmosphere 36 in the container 1 through the ventilation path. As shown in the figures, the length L of each ventilation groove 38 is taken in its longitudinal direction; the depth d of each ventilation groove 38 is taken from a bottom of the ventilation groove 38 to the adjacent abutting region 21; the width w of each ventilation groove 38 is taken in a direction transverse to the longitudinal direction and the depth direction of the ventilation groove.

The receptacle according to the invention can be fully manufactured from the same plastic material as the container. In those cases in which a pharmaceutically approved material should be used, it has the advantage that no further material like cardboard has to be used.

## Claims

1. Receptacle (12) intended to regulate the atmosphere in a container (1) for storing sensitive products, wherein the receptacle (12) is designed for forming a chamber (32) which is at least partially filled with an active substance (34), the receptacle (12) comprising two main elements:
- a first element (30; 50) comprising:
- a transverse wall (14; 54) with a first main side (16; 56) facing the interior of the chamber (32); and
- a peripheral wall (18; 58) integrally formed with the first main side (16; 56) of the transverse wall (14; 54); and
- a second element (26) comprising:
- a bottom wall (28); and
- a sheath (20) extending from the bottom wall (28) and being integrally formed with the bottom wall (28); wherein
- the peripheral wall (18; 58) of the first element (30; 50) and the sheath (20) of the second element (26) are dimensioned and mutually arranged to surround one another in contact with each other in abutting regions (21) so that the inner volume of the chamber (32) capable of receiving the active substance (34) is delimited by the bottom wall (28) of the second element (26), the transverse wall (14; 54) of the first element (30; 50) and either the peripheral wall (18; 58) of the first element (30; 50) or the sheath (20) of the second element (26); and
- at least one ventilation groove (38), formed as a recess in at least one of the first and second elements, is provided between the peripheral wall (18; 58) of the first element (30; 50) and the sheath (20) of the second element (26), preferably running in a direction perpendicular to the bottom wall (28),
**characterized in that**
at least one radial passage (40), formed as a recess in at least one of the first and second elements, is provided to connect the ventilation groove (38) with the inner volume of the chamber (32), such that the ventilation groove (38) and the radial passage (40) form at least a part of a ventilation path connecting the chamber (32) with the atmosphere in the container (1).

2. Receptacle (12) according to claim 1, wherein an open end (29) of the sheath (20) remote from the bottom wall (28) is in abutment against the transverse wall (14; 54) of the first element (30; 50).

3. Receptacle (12) according to claim 1 or claim 2, wherein at least one section of the ventilation path connecting the chamber (32) with the atmosphere in the container (1) has a cross-sectional dimension of 0.2 mm or less, preferably 0.1 mm or less, more preferably 0.05 mm or less.

4. Receptacle (12) according to any of the preceding claims, wherein the at least one ventilation groove (38) has a depth of 0.2 mm or less, preferably 0.1 mm or less, more preferably 0.05 mm or less.

5. Receptacle (12) according to any of the preceding claims, wherein the ratio of the length (L) to the depth (d) of each ventilation groove (38) is greater than 10, preferably greater than 20, more preferably greater than 40.

6. Receptacle (12) according to any of the preceding claims, wherein a plurality of ventilation grooves (38) are provided.

7. Receptacle (12) according to any of the preceding claims, wherein the sheath (20) has at least one ventilation groove (38) extending to the open end (29) of the sheath (20) remote from the bottom wall (28); and
wherein the open end (29) of the sheath (20) remote from the bottom wall (28) is preferably a crenelated rim comprising at least one radial crenel (40), the at least one ventilation groove (38) being arranged such that the ventilation groove (38) ends at a radial crenel (40) of the crenelated rim or at a section (43) of the ventilation path which connects an end of the ventilation groove with at least one radial crenel (40).

8. Receptacle (12) according to any of the preceding claims, wherein the sheath (20) surrounds the peripheral wall (18), and the at least one ventilation groove (38) is arranged on an inner peripheral surface of the sheath (20) .

9. Receptacle (12) according to any of the claims 1 to 7, wherein the peripheral wall (18; 58) surrounds the sheath (20), and the at least one ventilation groove (38) is arranged on an outer peripheral surface of the sheath (20).

10. Receptacle (12) according to any of the preceding claims, wherein the first element (30; 50) is a constitutive part of the container (1).

11. Cap (10) for closing an open end of a container body (11) and comprising a receptacle (12) according to any of the claims 1 to 10, wherein
- the cap (10) is provided with a base with a first main side (16) facing the interior of the container (1) when closing the container; and
- the first element (30) of the receptacle (12) is integrally formed with the cap (10), wherein the transverse wall (14) is integrally formed with the base of the cap (10), and the peripheral wall (18) is a skirt integrally formed with the base of the cap (10).

12. Container body (11) comprising a receptacle (12) according to any of the claims 1 to 10, wherein
- the container body (11) is provided with a base with a first main side (56) facing the interior of the container (1); and
- the first element (50) of the receptacle (12) is a bottom part of the container body (11), wherein the transverse wall (54) is a bottom wall of the container body (11), and the peripheral wall (58) is a side wall of the container body (11).

13. Container body (11) comprising a receptacle (12) according to any of the claims 1 to 10.

14. Container (1) comprising a container body (11) according to claim 13 and an openable or removable cap (10), wherein the cap (10) comprises an annular sealing member (22), which sealing member (22) is arranged to cooperate with a side wall of the container body (11) at its open end to establish a circumferential seal between the cap (10) and the container body (11).

15. Use of a receptacle (12) according to any of the claims 1 to 10 in a container (1) for storing sensitive products such as moisture sensitive products or oxygen sensitive products, especially pharmaceutical products, preferably drugs, pills, tablets, globuli, granulate, lozenges, test strips or powder.

## Patentansprüche

1. Behälter (12), der dazu dient, die Atmosphäre in einem Behältnis (1) zum Speichern von empfindlichen Produkten zu regeln, wobei der Behälter (12) so konstruiert ist, dass er eine Kammer (32) bildet, die mindestens teilweise mit einem Wirkstoff (34) gefüllt ist, wobei der Behälter (12) zwei Hauptelemente umfasst:
- ein erstes Element (30; 50), das Folgendes umfasst:
- eine Querwand (14; 54) mit einer ersten Hauptseite (16; 56), die zu dem Inneren der Kammer (32) zeigt; und
- eine Umfangswand (18; 58), die einteilig mit der ersten Hauptseite (16; 56) der Querwand (14; 54) gebildet ist; und
- ein zweites Element (26), das Folgendes umfasst:
- eine Bodenwand (28); und
- eine Hülle (20), die sich von der Bodenwand (28) erstreckt und einteilig mit der Bodenwand (28) gebildet ist; wobei
- die Umfangswand (18; 58) des ersten Elements (30; 50) und die Hülle (20) des zweiten Elements (26) so bemessen und wechselseitig angeordnet sind, dass sie in Kontakt miteinander in angrenzenden Regionen (21) einander so umgeben, dass das Innenvolumen der Kammer (32), das fähig ist, den Wirkstoff (34) aufzunehmen, durch die Bodenwand (28) des zweiten Elements (26), die Querwand (14; 54) des ersten Elements (30; 50) und entweder die Umfangswand (18; 58) des ersten Elements (30; 50) oder die Hülle (20) des zweiten Elements (26) abgegrenzt ist; und
- mindestens eine Entlüftungsnut (38), die als eine Aussparung in mindestens einem des ersten und des zweiten Elements gebildet ist, zwischen der Umfangswand (18; 58) des ersten Elements (30; 50) und der Hülle (20) des zweiten Elements (26) bereitgestellt ist, wobei sie vorzugsweise in einer Richtung rechtwinklig zur Bodenwand (28) verläuft,
**dadurch gekennzeichnet ist, dass**
mindestens ein radialer Durchgang (40), der als eine Aussparung in mindestens einem des ersten und des zweiten Elements gebildet ist, bereitgestellt ist, um die Entlüftungsnut (38) mit dem Innenvolumen der Kammer (32) so zu verbinden, dass die Entlüftungsnut (38) und der radiale Durchgang (40) mindestens einen Teil eines Entlüftungspfads bilden, der die Kammer (32) mit der Atmosphäre im Behältnis (1) verbindet.

2. Behälter (12) nach Anspruch 1, wobei ein offenes Ende (29) der Hülle (20), das von der Bodenwand (28) entfernt ist, im Widerlager gegen die Querwand (14; 54) des ersten Elements (30; 50) anliegt.

3. Behälter (12) nach Anspruch 1 oder Anspruch 2, wobei mindestens ein Abschnitt des Entlüftungspfads, der die Kammer (32) mit der Atmosphäre im Behältnis (1) verbindet, eine Querschnittsabmessung von 0,2 mm oder weniger, vorzugsweise von 0,1 mm oder weniger, bevorzugter von 0,05 mm oder weniger aufweist.

4. Behälter (12) nach einem der vorstehenden Ansprüche, wobei die mindestens eine Entlüftungsnut (38) eine Tiefe von 0,2 mm oder weniger, vorzugsweise von 0,1 mm oder weniger, bevorzugter von 0,05 mm oder weniger aufweist.

5. Behälter (12) nach einem der vorstehenden Ansprüche, wobei das Verhältnis der Länge (L) zur Tiefe (d) von jeder Entlüftungsnut (38) größer als 10, vorzugsweise größer als 20, bevorzugter größer als 40 ist.

6. Behälter (12) nach einem der vorstehenden Ansprüche, wobei eine Vielzahl von Entlüftungsnuten (38) bereitgestellt ist.

7. Behälter (12) nach einem der vorstehenden Ansprüche, wobei
die Hülle (20) mindestens eine Entlüftungsnut (38) aufweist, die sich zu dem offenen Ende (29) der Hülle (20) von der Bodenwand (28) entfernt erstreckt; und
wobei das offene Ende (29) der Hülle (20) von der Bodenwand (28) entfernt vorzugsweise ein gescharteter Rand ist, der mindestens eine radiale Scharte (40) umfasst, die mindestens eine Entlüftungsnut (38) so angeordnet ist, dass die Entlüftungsnut (38) an einer radialen Scharte (40) des gescharteten Rands oder an einem Abschnitt (43) des Entlüftungspfads, der ein Ende der Entlüftungsnut mit mindestens einer radialen Scharte (40) verbindet, endet.

8. Behälter (12) nach einem der vorstehenden Ansprüche, wobei die Hülle (20) die Umfangswand (18) umgibt und die mindestens eine Entlüftungsnut (38) an einer Innenumfangsfläche der Hülle (20) angeordnet ist.

9. Behälter (12) nach einem der Ansprüche 1 bis 7, wobei die Umfangswand (18; 58) die Hülle (20) umgibt und die mindestens eine Entlüftungsnut (38) an einer Außenumfangsfläche der Hülle (20) angeordnet ist.

10. Behälter (12) nach einem der vorstehenden Ansprüche, wobei das erste Element (30; 50) ein konstitutiver Teil des Behältnisses (1) ist.

11. Kappe (10) zum Verschließen eines offenen Endes eines Behältniskörpers (11), der einen Behälter (12) nach einem der Ansprüche 1 bis 10 umfasst, wobei
- die Kappe (10) mit einer Basis mit einer ersten Hauptseite (16) bereitgestellt ist, die zum Inneren des Behältnisses (1) zeigt, wenn sie den Container verschließt; und
- das erste Element (30) des Behälters (12) einteilig mit der Kappe (10) gebildet ist, wobei die Querwand (14) einteilig mit der Basis der Kappe (10) gebildet ist und die Umfangswand (18) eine Schürze ist, die einteilig mit der Basis der Kappe (10) gebildet ist.

12. Behältniskörper (11) umfassend einen Behälter (12) nach einem der Ansprüche 1 bis 10, wobei
- der Behältniskörper (11) mit einer Basis mit einer ersten Hauptseite (56) bereitgestellt ist, die zum Inneren des Behältnisses (1) zeigt; und
- das erste Element (50) des Behälters (12) ein Bodenteil des Behältniskörpers (11) ist, wobei die Querwand (54) eine Bodenwand des Behältniskörpers (11) ist und die Umfangswand (58) eine Seitenwand des Behältniskörpers (11) ist.

13. Behältniskörper (11) umfassend einen Behälter (12) nach einem der Ansprüche 1 bis 10.

14. Behältnis (1), umfassend einen Behältniskörper (11) nach Anspruch 13 und eine öffenbare oder entfernbare Kappe (10), wobei die Kappe (10) ein ringförmiges Dichtungselement (22) umfasst, wobei das Dichtungselement (22) angeordnet ist, um mit einer Seitenwand des Behältniskörpers (11) an dessen offenem Ende zusammenzuarbeiten, um eine Umfangsdichtung zwischen der Kappe (10) und dem Behältniskörper (11) herzustellen.

15. Verwenden eines Behälters (12) nach einem der Ansprüche 1 bis 10 in einem Behältnis (1) zum Speichern von empfindlichen Produkten, wie auf Feuchtigkeit empfindliche Produkte oder auf Sauerstoff empfindliche Produkte, insbesondere pharmazeutische Produkte, vorzugsweise Medikamente, Pillen, Tabletten, Globuli, Granulate, Pastillen, Teststreifen oder Pulver.

## Revendications

1. Récipient (12) destiné à réguler l'atmosphère dans un récipient (1) pour stocker des produits sensibles, dans lequel le récipient (12) est conçu pour former une chambre (32) qui est au moins partiellement remplie d'une substance active (34), le récipient (12) comprenant deux éléments principaux :
- un premier élément (30 ; 50) comprenant :
- une paroi transversale (14 ; 54) ayant un premier côté principal (16 ; 56) tourné vers l'intérieur de la chambre (32) ; et
- une paroi périphérique (18 ; 58) formée d'un seul tenant avec le premier côté principal (16 ; 56) de la paroi transversale (14 ; 54) ; et
- un second élément (26) comprenant :
- une paroi inférieure (28) ; et
- une gaine (20) s'étendant à partir de la paroi inférieure (28) et étant formée d'un seul tenant avec la paroi inférieure (28) ; dans lequel
- la paroi périphérique (18 ; 58) du premier élément (30 ; 50) et la gaine (20) du second élément (26) sont dimensionnées et mutuellement agencées pour s'entourer l'une l'autre en contact l'une avec l'autre dans des régions de butée (21) de sorte que le volume interne de la chambre (32) apte à recevoir la substance active (34) est délimité par la paroi inférieure (28) du second élément (26), la paroi transversale (14 ; 54) du premier élément (30 ; 50) et soit la paroi périphérique (18 ; 58) du premier élément (30 ; 50) soit la gaine (20) du second élément (26) ; et
- au moins une rainure de ventilation (38), formée sous la forme d'un renfoncement dans au moins l'un des premier et second éléments, est prévue entre la paroi périphérique (18 ; 58) du premier élément (30 ; 50) et la gaine (20) du second élément (26), préférablement orientée dans une direction perpendiculaire à la paroi inférieure (28),
**caractérisé en ce que**
au moins un passage radial (40), formé sous la forme d'un renfoncement dans au moins l'un des premier et second éléments, est prévu pour relier la rainure de ventilation (38) au volume interne de la chambre (32), de telle manière que la rainure de ventilation (38) et le passage radial (40) forment au moins une partie d'un chemin de ventilation reliant la chambre (32) à l'atmosphère dans le récipient (1).

2. Récipient (12) selon la revendication 1, dans lequel une extrémité ouverte (29) de la gaine (20) éloignée de la paroi inférieure (28) est en butée contre la paroi transversale (14 ; 54) du premier élément (30 ; 50).

3. Récipient (12) selon la revendication 1 ou la revendication 2, dans lequel au moins une section du chemin de ventilation reliant la chambre (32) à l'atmosphère dans le récipient (1) présente une dimension en section transversale de 0,2 mm ou moins, préférablement de 0,1 mm ou moins, plus préférablement de 0,05 mm ou moins.

4. Récipient (12) selon l'une quelconque des revendications précédentes, dans lequel l'au moins une rainure de ventilation (38) présente une profondeur de 0,2 mm ou moins, préférablement de 0,1 mm ou moins, plus préférablement de 0,05 mm ou moins.

5. Récipient (12) selon l'une quelconque des revendications précédentes, dans lequel le rapport de la longueur (L) à la profondeur (d) de chaque rainure de ventilation (38) est plus grand que 10, préférablement plus grand que 20, plus préférablement plus grand que 40.

6. Récipient (12) selon l'une quelconque des revendications précédentes, dans lequel une pluralité de rainures de ventilation (38) sont fournies.

7. Récipient (12) selon l'une quelconque des revendications précédentes, dans lequel la gaine (20) présente au moins une rainure de ventilation (38) s'étendant jusqu'à l'extrémité ouverte (29) de la gaine (20) éloignée de la paroi inférieure (28) ; et dans lequel l'extrémité ouverte (29) de la gaine (20) éloignée de la paroi inférieure (28) est préférablement une bordure crénelée comprenant au moins un créneau radial (40), l'au moins une rainure de ventilation (38) étant agencée de telle manière que la rainure de ventilation (38) se termine au niveau d'un créneau radial (40) de la bordure crénelée ou au niveau d'une section (43) du chemin de ventilation qui relie une extrémité de la rainure de ventilation à au moins un créneau radial (40).

8. Récipient (12) selon l'une quelconque des revendications précédentes, dans lequel la gaine (20) entoure la paroi périphérique (18), et l'au moins une rainure de ventilation (38) est agencée sur une surface périphérique interne de la gaine (20).

9. Récipient (12) selon l'une quelconque des revendications 1 à 7, dans lequel la paroi périphérique (18 ; 58) entoure la gaine (20), et l'au moins une rainure de ventilation (38) est agencée sur une surface périphérique externe de la gaine (20).

10. Récipient (12) selon l'une quelconque des revendications précédentes, dans lequel le premier élément (30 ; 50) est une partie constitutive du récipient (1).

11. Bouchon (10) pour fermer une extrémité ouverte d'un corps (11) de récipient et comprenant un récipient (12) selon l'une quelconque des revendications 1 à 10, dans lequel
- le bouchon (10) étant muni d'une base ayant un premier côté principal (16) tourné vers l'intérieur du récipient (1) lors de la fermeture du récipient ; et
- le premier élément (30) du récipient (12) étant formé d'un seul tenant avec le bouchon (10), dans lequel la paroi transversale (14) est formée d'un seul tenant avec la base du bouchon (10), et la paroi périphérique (18) est une jupe formée d'un seul tenant avec la base du bouchon (10).

12. Corps (11) de récipient comprenant un récipient (12) selon l'une quelconque des revendications 1 à 10, dans lequel
- le corps (11) de récipient étant muni d'une base ayant un premier côté principal (56) tournée vers l'intérieur du récipient (1) ; et
- le premier élément (50) du récipient (12) est une partie inférieure du corps (11) de récipient, dans lequel la paroi transversale (54) est une paroi inférieure du corps (11) de récipient, et la paroi périphérique (58) est une paroi latérale du corps (11) de récipient.

13. Corps (11) de récipient comprenant un récipient (12) selon l'une quelconque des revendications 1 à 10.

14. Récipient (1) comprenant un corps (11) de récipient selon la revendication 13 et un bouchon (10) apte à être ouvert ou étant amovible, dans lequel le bouchon (10) comprend une pièce d'étanchéité (22) annulaire, laquelle pièce d'étanchéité (22) est agencée de façon à coopérer avec une paroi latérale du corps (11) de récipient au niveau de son extrémité ouverte afin d'établir un joint circonférentiel entre le bouchon (10) et le corps (11) de récipient.

15. Utilisation d'un récipient (12) selon l'une quelconque des revendications 1 à 10 dans un récipient (1) pour stocker des produits sensibles tels que des produits sensibles à l'humidité ou des produits sensibles à l'oxygène, en particulier des produits pharmaceutiques, préférablement des médicaments, des pilules, des comprimés, des globuli, des granulés, des pastilles, des bandelettes de test ou de la poudre.
